# EUROPEAN PATENT APPLICATION

(11) **EP 4 826 550 A1**
(43) Date of publication of application: **21.10.2026**
(21) Application number: 24902279.9
(22) Date of filing: 24.09.2024
(51) Int. Cl.: G06F 12/0862, G06F 3/06

(54) **DATA PROCESSING METHOD AND APPARATUS**

(30) Priority: 13.12.2023 CN 202311715740; 27.03.2024 CN 202410361777
(71) Applicant: Huawei Cloud Computing Technologies Co., Ltd., Gui'an New District, Guizhou 550025 (CN)
(72) Inventor: XU, Ruohang, Guiyang, Guizhou 550025 (CN); LIANG, Hui, Guiyang, Guizhou 550025 (CN); BAI, Pingchang, Guiyang, Guizhou 550025 (CN)
(74) Representative: Huawei European IPR
(86) International application number: PCT/CN2024/120858
(87) International publication number: WO 2025/123853

(57) **Abstract**

This application provides a data processing method and an apparatus, relating to the field of storage. The data processing method is applied to a client and a server side of an object storage service. The method includes: the server side receives a first object access request sent by the client, where the first object access request includes a first target object; the server side determines cached data of the first target object, where the data of the first target object is obtained from a target object storage device and cached based on a prefetch object identifier carried in a second object access request, and the prefetch object identifier indicates that the first target object is a prefetch object; and the server side sends the data of the first target object to the client. This improves resource utilization of the server side during idle periods, increases the speed at which the client obtains objects, and reduces latency in object storage.

## Description

### TECHNICAL FIELD

Embodiments of this application relate to the field of storage, and in particular, to a data processing method and an apparatus.

### BACKGROUND

In the digital era, data has become a core asset of various industries and must be stored and managed in an efficient, scalable, and highly reliable manner. Object storage (object storage) is an object-centric storage manner in which data is stored as objects instead of files. Object storage has advantages such as high reliability, high scalability, and high performance.

User operations on objects are typically performed over a long connection involving a plurality of operations. However, in existing object storage, a server side obtains data of the corresponding object when receiving a request from a client. When there are a plurality of operations, repeatedly obtaining data of the corresponding object for each request results in high latency.

### SUMMARY

This application provides a data processing method and an apparatus, so as to reduce latency in object storage.

According to a first aspect, this application provides a data processing method, applied to a server side of an object storage service. In a procedure of the data processing method, the server side first receives a first object access request sent by a client of the object storage service, where the first object access request includes a first target object. Then, the server side determines that data of the first target object has been cached, where the data of the first target object is obtained from a target object storage device and cached based on a prefetch object identifier carried in a second object access request, and the prefetch object identifier indicates that the first target object is a prefetch object. Finally, the server side sends the data of the first target object to the client of the object storage service.

Based on the foregoing data processing method, the server side determines, based on the second object access request received prior to the first object access request, that a prefetch object to be accessed by the client next time is the first target object, so as to complete acquisition and caching of the first target object before receiving the first object access request from the client, and return the cached data of the first target object to the client when the first object access request is received. This improves resource utilization of the server side during idle periods, increases the speed at which the client obtains objects, and reduces latency in object storage.

As a possible implementation, before receiving the first object access request, the server side needs to obtain and cache the data of the first target object based on a prefetch object identifier carried in an object access request received prior to the first object access request. The server side receives the second object access request sent by the client, where the second object access request includes a second target object and a prefetch object identifier; then obtains, from the target object storage device, and caches the data of the first target object based on the prefetch object identifier; and sends data of the second target object to the client. Therefore, when the client sends the second object access request to the server side, in addition to carrying the second target object, the second object access request further includes a prefetch object identifier of a prefetch object that the client may access next time. The server side can obtain and cache the data of the first target object based on the prefetch object identifier, thereby implementing pre-storage of the prefetch object. In a subsequent operation process of the first target object, a time for obtaining and caching the data of the first target object is saved, which improves the speed of obtaining an object by the client.

As a possible implementation, the server side further includes a pre-store queue and a communication queue. The server side determines that a received object access request includes a prefetch object identifier, adds an access request for a prefetch object in the received object access request to the pre-store queue, and adds an access request for a target object in the received object access request to the communication queue. The server side determines that a received object access request does not include a prefetch object identifier, and adds the received object access request to the communication queue. Therefore, the server side uses the pre-store queue and the communication queue to respectively process the access request for the prefetch object and the access request for the target object. The two types of access requests are asynchronously processed, which prevents acquisition and caching of the prefetch object from blocking return of the target object, improves the utilization rate of the server side during an idle period, and further improves the speed of obtaining an object by the client.

As a possible implementation, the prefetch object identifier includes a whole-object prefetch identifier and a range-object prefetch identifier. The whole-object prefetch identifier indicates an object name of the prefetch object. The range-object prefetch identifier indicates a data range of the prefetch object. Therefore, the server side may cache all data of the prefetch object based on the whole-object prefetch identifier, or may cache some data of the prefetch object based on the range-object prefetch identifier, which improves operation accuracy of the prefetch object. When the client needs only some data of the prefetch object, only some data of the prefetch object is obtained and cached, without needing to obtain all data of the prefetch object, thereby avoiding a waste of cache space and improving the utilization rate of cache resource.

As a possible implementation, the server side obtains the data of the first target object from the target object storage device, and sequentially caches a first byte and a data subject in the data of the first target object. Therefore, before inserting a task into the pre-store queue, the first byte of the prefetch object is first cached, and then the data subject is processed, so as to reduce a time required for sending the first byte, so that the client can quickly obtain the first byte and improve experience of the first byte.

As a possible implementation, the pre-store queue is a priority queue, and in the pre-store queue, data with an uncached first byte has a first priority, data with a smallest data body has a second priority, and data with a most recent access time has a third priority. Therefore, it is ensured that the prefetch object better meets a requirement of a next request of a tenant, thereby improving performance of object access.

As a possible implementation, the server side determines that a cache time of the first target object is greater than or equal to a preset time, and deletes the cached data of the first target object. Therefore, the utilization rate of the cache space is further improved.

According to a second aspect, this application provides a data processing apparatus, including a transceiver module and a processing module. The transceiver module is configured to receive a first object access request sent by a client of an object storage service, where the first object access request includes a first target object. The processing module is configured to determine cached data of the first target object in response to the first object access request, where the data of the first target object is obtained from a target object storage device and cached based on a prefetch object identifier carried in a second object access request, and the prefetch object identifier indicates that the first target object is a prefetch object. The transceiver module is further configured to send the data of the first target object to the client.

As a possible implementation, the transceiver module is further configured to receive the second object access request sent by the client, where the second object access request includes a second target object and the prefetch object identifier. The processing module is further configured to obtain, from the target object storage device, and cache the data of the first target object based on the prefetch object identifier. The transceiver module is further configured to send data of the second target object to the client.

As a possible implementation, the server side further includes a pre-store queue and a communication queue. The processing module is further configured to: determine that a received object access request includes a prefetch object identifier, add an access request for a prefetch object in the received object access request to the pre-store queue, and add an access request for a target object in the received object access request to the communication queue; or determine that a received object access request does not include a prefetch object identifier, and add the received object access request to the communication queue.

As a possible implementation, the prefetch object identifier includes a whole-object prefetch identifier and a range-object prefetch identifier, the whole-object prefetch identifier indicates an object name of a prefetch object, and the range-object prefetch identifier indicates a data range of the prefetch object.

As a possible implementation, the processing module is specifically configured to: obtain the data of the first target object from the target object storage device, and sequentially cache a first byte and a data body of the data of the first target object.

As a possible implementation, the pre-store queue is a priority queue, and in the pre-store queue, data with an uncached first byte has a first priority, data with a smallest data body has a second priority, and data with a most recent access time has a third priority.

As a possible implementation, the processing module is further configured to: determine that a cache time of the first target object is greater than or equal to a preset time, and delete the cached data of the first target object.

As a possible implementation, the data processing apparatus may further include other modules that perform the operation steps of the data processing method in the first aspect.

For technical principles and beneficial effects of the second aspect, reference can be made to related descriptions of the first aspect. Details are not described herein again.

According to a third aspect, an object storage service system is provided, including a client and a server side. The client is configured to perform the data processing method in any possible implementation of the first aspect, and the server side is configured to send an object access request to the server side and receive data of a target object sent by the server side.

According to a fourth aspect, a computing device cluster is provided, including at least one computing device, and each computing device includes a processor and a memory. The processor of the at least one computing device is configured to execute instructions stored in the memory of the at least one computing device, to cause the computing device cluster to perform the data processing method described in any possible implementation in the first aspect.

According to a fifth aspect, a computer program product is provided. The computer program product includes a computer program or instructions. When the computer program or the instructions are run on a computer, the computer is caused to perform the data processing method described in any possible implementation in the first aspect.

According to a sixth aspect, a computer-readable storage medium is provided. The readable storage medium includes a computer program or instructions. When the computer program or the instructions are run on a computer, the computer is caused to perform the data processing method described in any possible implementation in the first aspect.

### BRIEF DESCRIPTION OF DRAWINGS

FIG. 1 is a diagram of a scenario of an object storage service according to this application;
FIG. 2 is a diagram of an architecture of an object storage system according to this application;
FIG. 3 is a schematic flowchart of a data processing method according to this application;
FIG. 4 is a schematic flowchart of processing steps of a prefetch object according to this application;
FIG. 5 is a schematic flowchart of processing steps of a pre-store queue and a communication queue according to this application;
FIG. 6 is a diagram of a prefetch object identifier according to this application;
FIG. 7 is a diagram of another prefetch object identifier according to this application;
FIG. 8 is a diagram of a first byte and a data object according to this application;
FIG. 9 is a diagram of a structure of a data processing apparatus according to this application;
FIG. 10 is a diagram of a structure of a computing device according to this application;
FIG. 11 is a diagram of a structure of a computing device cluster according to this application; and
FIG. 12 is a diagram of a structure in which computing devices are connected via a network according to this application.

### DESCRIPTION OF EMBODIMENTS

The data processing method provided in embodiments of this application can be applied to an object storage service scenario in the field of storage. The following briefly describes technologies that may be involved in this application.
(1) Object storage service (object storage service, OBS): An OBS is an object-based storage service, and has advantages of massive capacity, security, high reliability, and low costs. The OBS is a service oriented to internet access. Tenants can establish a connection with an object storage service layer (a computing node that supports the OBS) via an object storage client, create a bucket (bucket) in a storage node managed by the object storage service layer, and then access and manage an object in the bucket. The object storage service layer stores the object in the bucket in a sequential distribution manner by default. The sequential distribution manner may also be referred to as lexicographical distribution or range (range) distribution.
(2) Object (object): An object is a basic unit of data storage in an object storage system. One object is a collection of data from a file and related attribute information (metadata) of the file. Data uploaded by a tenant to the OBS is stored in a bucket as an object. The object includes three parts: key (key), metadata (metadata), and data (data). The key is an object name. For example, the key is a character sequence encoded in utf-8 with a length greater than 0 and not exceeding 1024. Each object in a bucket has a unique object key.
(3) Bucket (bucket): A bucket is a container for storing objects in the OBS. Object storage provides a flat storage mode based on a bucket and an object. All objects in the bucket are at the same logical level, and a multi-level tree directory structure in a file system is eliminated. Each bucket has respective attributes such as a storage class, access permission, and a region to which the bucket belongs. A tenant may create buckets with different storage classes and access permissions and configure more advanced attributes to meet storage requirements in different scenarios.
(4) Object storage device (object storage device, OSD): An OSD is a basic storage unit of an object storage system, is disposed on a physical disk, and is specifically storage space of a fixed size of the physical disk. The object storage system manages physical disks of a plurality of computing devices in the form of an OSD.

A tenant may use a pre-registered account and password to log in to a cloud management platform on a public cloud access page. After the login is successful, the tenant may select and purchase corresponding public cloud services such as an OBS, a virtual machine service, and a container service on the public cloud access page. For the OBS, the tenant can create a plurality of buckets via a configuration interface or an application programming interface (application programming interface, API) on the public cloud access page provided by the cloud platform. There is no limit to the total quantity and size of objects stored in each bucket. The tenant does not need to consider scalability of data. The OBS is a service based on the representational state transfer API (Representational State Transfer API, REST API), hypertext transport protocol (Hypertext Transport Protocol, HTTP), and hypertext transfer protocol secure (Hypertext Transfer Protocol Secure, HTTPS). The tenant can locate a bucket resource via a uniform resource locator (Uniform Resource Locator, URL), also referred to as an access domain name or simply a domain name in this application. In the OBS, a bucket name is globally unique and cannot be modified. To be specific, a name of a bucket created by the tenant cannot be the same as a name of another bucket that has been created by the tenant and cannot be the same as a name of a bucket created by another tenant.

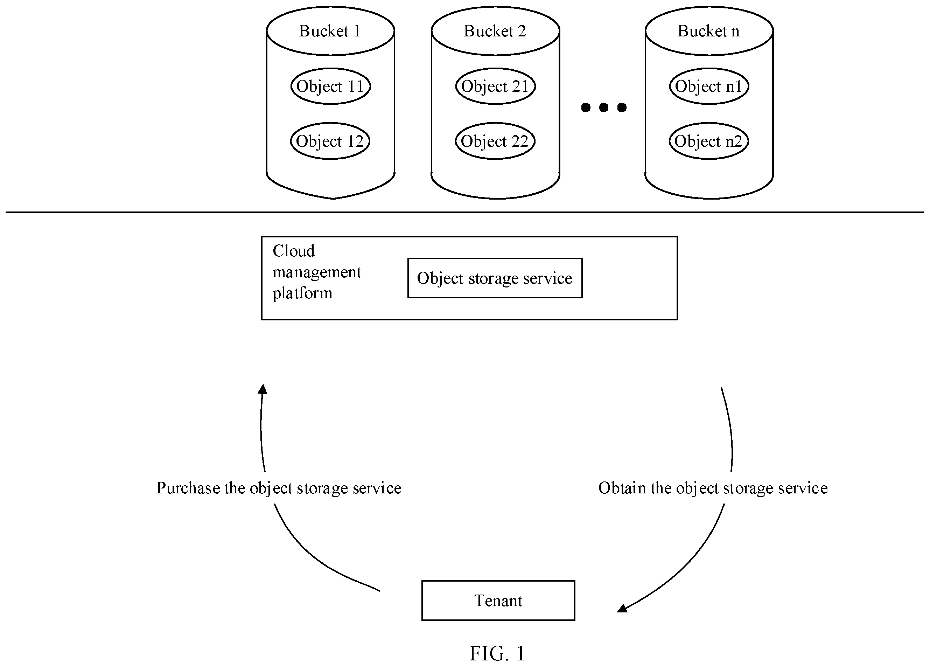

FIG. 1 illustrates a diagram of at least one application scenario according to an embodiment of this application. As shown in FIG. 1, each bucket may include a plurality of objects, and objects in the bucket are isolated from each other. A tenant logs in to a cloud management platform via an object storage client, and selects and purchases a cloud service of an object storage service on the cloud management platform. After the purchase, the tenant may perform object storage based on a function provided by the object storage service. The cloud management platform is mainly configured to manage an infrastructure for running the object storage service. For example, the infrastructure for running the object storage service may include a plurality of data centers disposed in different regions, and each data center includes a plurality of servers. The data center may provide a basic resource for the object storage service, for example, a computing resource or a storage resource. Therefore, when purchasing and using the object storage service, the tenant mainly pays for used resources. Specifically, the object storage service provides a domain name of a bucket. The tenant may access the domain name of the bucket via the object storage client, to upload data to the bucket or download data from the bucket. The uploaded data is stored in the bucket in the form of objects.

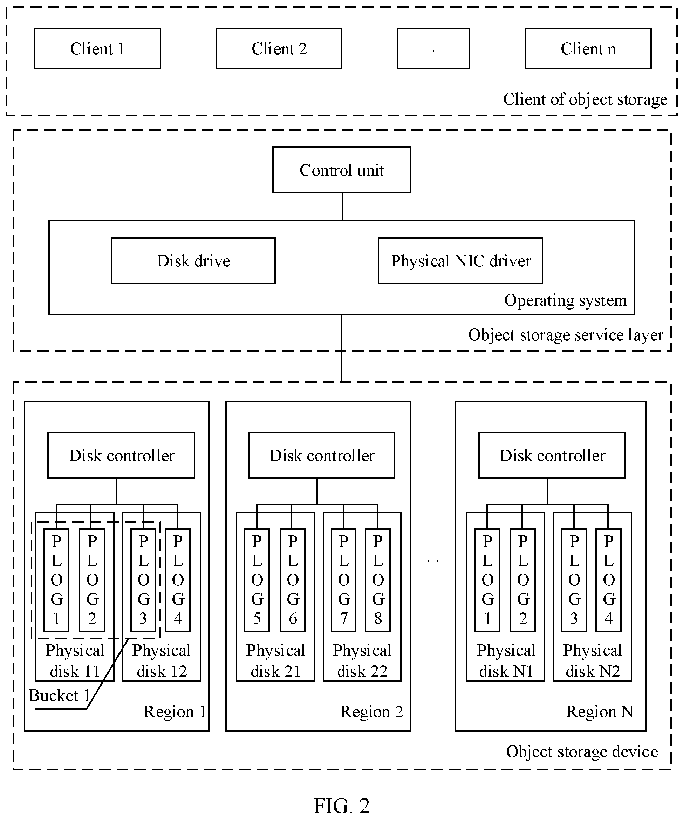

FIG. 2 illustrates a diagram of an architecture of an object storage system according to an embodiment of this application. The object storage system includes an object storage client, an object storage service layer, and an object storage device.

The object storage client may be disposed in a terminal device. The terminal device may be a mobile phone, a notebook computer, a tablet computer, a palmtop computer, a wireless terminal in a smart city, or a wireless device in a smart home. A tenant logs in to the cloud management platform via a client, and selects and purchases a cloud service of object storage on the cloud management platform.

The object storage service layer is configured to manage one or more object storage devices. The object storage service layer includes one or more server sides, and the one or more server sides may be disposed in a service device of the service layer. For example, the service device is connected to a storage device via a switching device. For another example, the service device is connected to a terminal device via a remote connection gateway.

A tenant uses an account to log in to the object storage service layer via a client, and selects and purchases a cloud service of object storage in the service layer, such as creating a bucket and configuring a bucket name. After detecting an operation (for example, creating a bucket) of the tenant, the service layer may issue a creation command to the object storage device, where the creation command includes information such as a bucket name and a domain name, and the creation command is used for notifying the storage device to create a bucket and store information such as the bucket name and the bucket domain name. After a bucket is created, the tenant can access the bucket domain name via the object storage client, locate the bucket in the storage device, and upload, download, or delete an object to or from the bucket.

The service layer includes a control unit and an operating system. The control unit runs on the operating system. The operating system includes a disk driver and a physical NIC driver. The control unit controls a disk controller via the disk driver to configure a physical disk as a plurality of persistence logs (persistence log, PLOG).

A plurality of data centers in different regions (Region) may be disposed in the infrastructure for running the object storage service. For example, object storage devices are disposed in the plurality of data centers in different regions, and each data center includes a plurality of object storage devices. Each object storage device includes at least one physical disk. For example, the disk controller sets a physical disk 11 and a physical disk 12 in Region 1 as four PLOGs.

After receiving a creation instruction of a bucket 1, the service layer notifies the control unit to create the bucket 1. The control unit creates the bucket 1 via the operating system on the physical disk 11 and the physical disk 12 in the object storage device. The PLOGs of the bucket 1 are distributed in the physical disk 11 and the physical disk 12, and information such as a bucket name and a bucket domain name of the bucket 1 is stored.

When the tenant needs to upload an object to the bucket 1 via the client, the tenant can trigger the object storage device via the client to write the object to the bucket 1. For example, a control unit in the object storage service layer may write the object to the bucket 1.

When the tenant needs to download an object from the bucket 1 via the client, the tenant can trigger the object storage device via the client to read the object from the bucket 1. For example, the control unit in the service layer may obtain the object from the bucket 1 and feed back the object to the client.

It should be noted that FIG. 1 and FIG. 2 are merely diagrams, and should not be construed as a limitation on this application. The data processing method provided in this application can be applied to any object storage server side or object storage device that has an object storage function. In addition, the application scenario of the object storage shown in FIG. 1 and the architecture of the object storage system shown in FIG. 2 may further include other devices or architectures, which are not shown in FIG. 1 or FIG. 2.

The following describes the data processing method provided in this embodiment in detail with reference to the accompanying drawings.

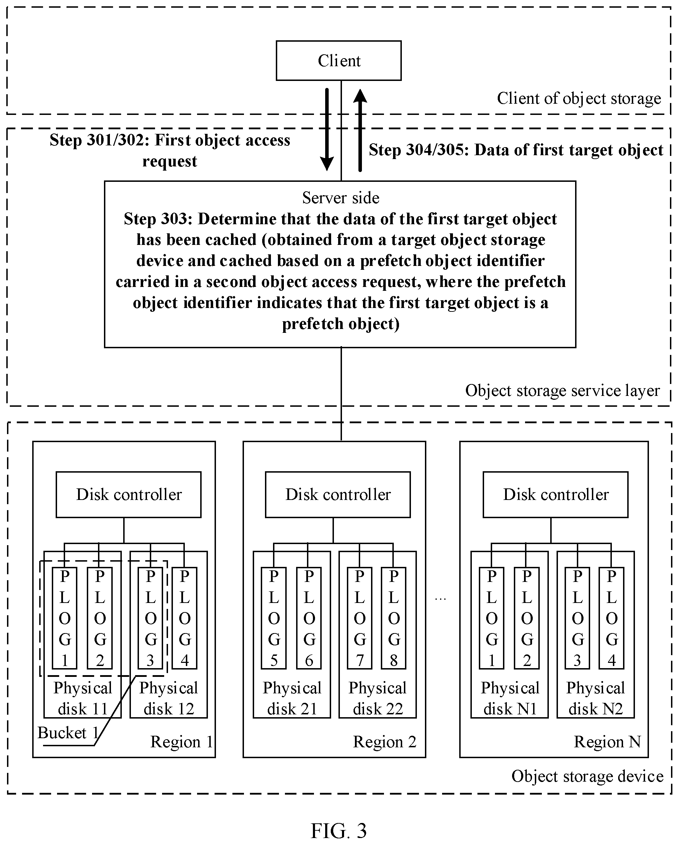

Steps of the data processing method provided in this application are performed by any client in the object storage clients and any server side in the object storage service layer that are shown in FIG. 2. The following describes the data processing method provided in this application with reference to FIG. 3.

Step 301: A client sends a first object access request to a server side.

The client sends the first object access request to the server side in response to a tenant operation.

As a possible implementation, the first object access request includes a first target object and a data operation.

Optionally, the first target object in the first object access request may be a unique identification name (identifier) of the first target object. The data operation may be data reading, data writing, or the like.

In a possible embodiment, the client can invoke application programming interfaces (Application Programming Interface, API) corresponding to functions such as upload, download, and deletion, to implement interaction with an object access request.

Step 302: The server side receives the first object access request sent by the client.

Step 303: The server side determines that data of the first target object has been cached.

If the server side determines that a prefetch request for the data of the first target object has been executed before receiving the first object access request, the data of the first target object has been cached in a pre-store queue.

As a possible implementation, the data of the first target object is obtained and cached based on a prefetch object identifier of the first target object carried in a second object access request. The server side receives the second object access request before the first object access request.

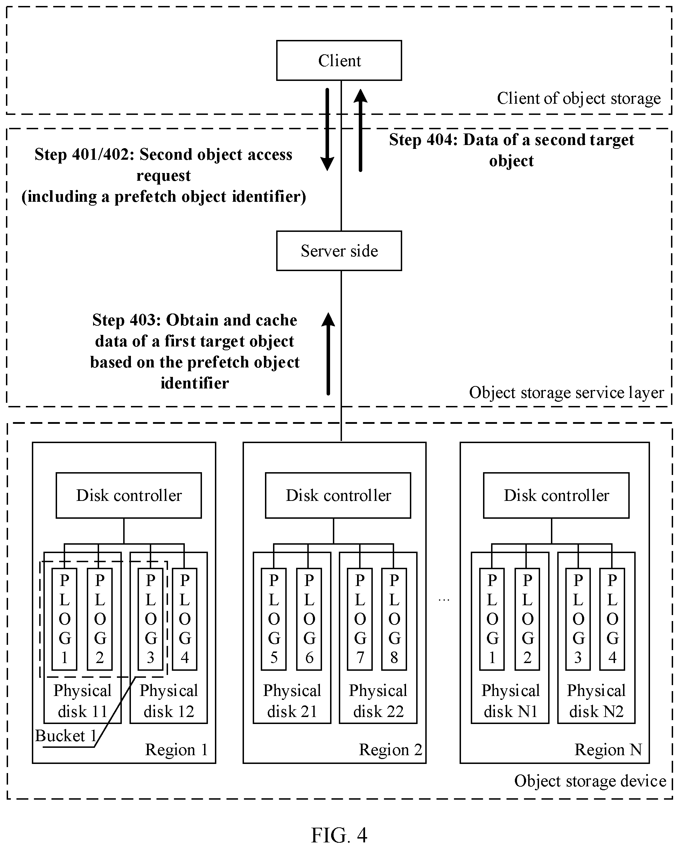

For specific steps in which the server side obtains and caches the data of the first target object based on the prefetch object identifier of the first target object carried in the second object access request, reference is made to step 401 to step 403 shown in FIG. 4. Details are not described herein again.

Step 304: The server side sends the data of the first target object to the client of the object storage service.

The server side sends cached data of the first target object to the client in the form of a first object access response. The first object access response includes the data of the first target object.

Step 305: The client receives the data of the first target object.

The client receives the data of the first target object that is sent by the server side in the form of the first object access response.

Based on the foregoing data processing method, the server side determines, based on the second object access request received prior to the first object access request, that a prefetch object to be accessed by the client next time is the first target object, so as to complete acquisition and caching of the first target object before receiving the first object access request from the client, and send the cached data of the first target object to the client when the first object access request is received. This improves resource utilization of the server side during idle periods, increases the speed at which the client obtains objects, and reduces latency in object storage.

With reference to FIG. 3, the foregoing describes an overall procedure in which the server side sends the cached data of the prefetch object to the client. Before this, the server side further needs to obtain and cache the data of the prefetch object, so as to send the cached second target object to the client that sends the first object access request when the first object access request is received. The following describes, with reference to FIG. 4, steps of obtaining and caching the data of the prefetch object by the server side.

Step 401: The client sends a second object access request to the server side.

The client sends the second object access request to the server side in response to an operation of the tenant.

As a possible implementation, the second object access request includes a second target object and a prefetch object identifier.

Optionally, the second target object in the second object access request may be a unique identification name (identifier) of the second target object. The second object access request may further include a data operation, and the data operation may be data reading, data writing, or the like.

Optionally, the prefetch object identifier indicates the data of the prefetch object. For example, the data operation corresponding to the second object access request and the operation corresponding to the first object access request in FIG. 3 are a plurality of operations in one long connection. If the data of the first target object is prefetch data after the tenant obtains the data of the second target object, the prefetch object identifier indicates that the data of the first target object is the data of the prefetch object.

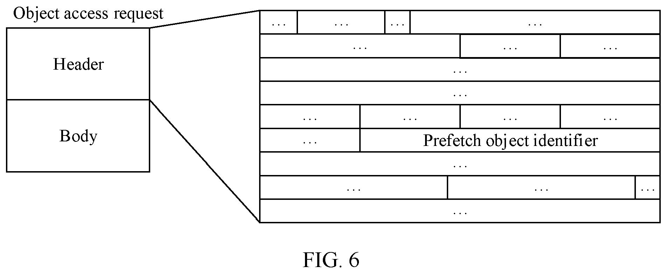

In a possible embodiment of this application, the first object access request and the second object access request may be packets. The prefetch object identifier may be carried in a header (header), and the prefetch object identifier is referred to as a prefetch object header field. The prefetch object identifier may alternatively be carried in a body (body). For a specific form of the prefetch object identifier, reference can be made to FIG. 6 and related descriptions below. Details are not described herein again.

Step 402: The server side receives the second object access request.

The server side receives the second object access request, and extracts a prefetch object identifier from the second object access request.

Step 403: The server side obtains and caches the data of the first target object based on the prefetch object identifier.

The server side obtains and caches, based on the prefetch object identifier, the data of the first target object from an object storage device storing the first target object.

As a possible implementation, after the server side extracts the prefetch object identifier in the second object access request, a second object access request that does not carry the prefetch object identifier is an access request for a target object. The prefetch object identifier may be considered as an access request for a prefetch object, and is also referred to as a prefetch request.

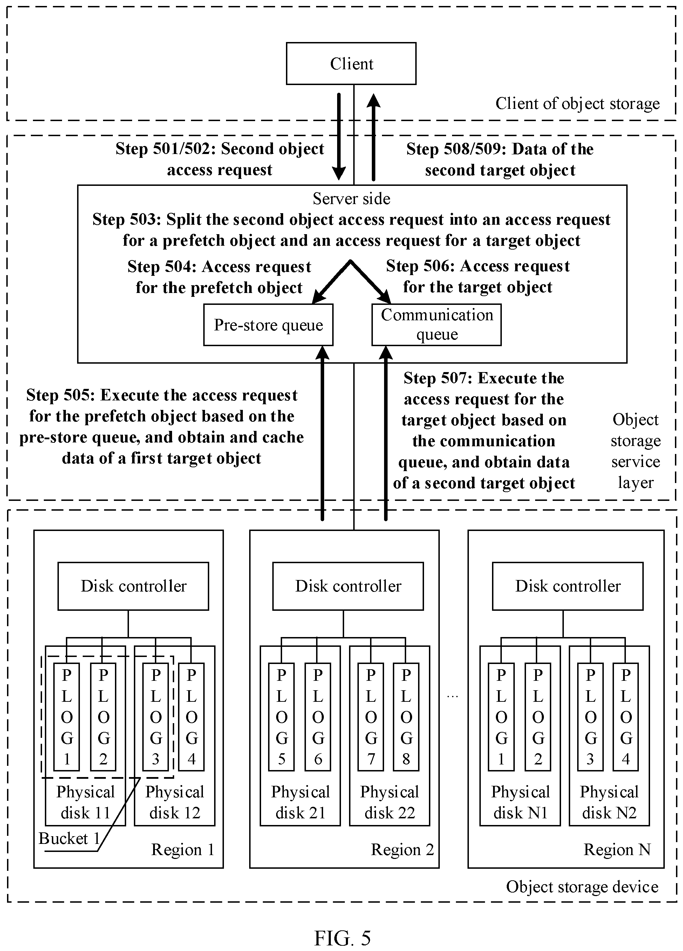

In a possible embodiment of this application, the access request for the target object and the access request for the prefetch object may be classified and added to the pre-store queue and the communication queue. The pre-store queue is used for maintaining a prefetch request, that is, the access request for the prefetch object, and the communication queue is used for maintaining the access request for the target object, that is, an object access request that does not carry a prefetch object identifier. For specific implementations of the pre-store queue and the communication queue, reference is made to FIG. 5 and related descriptions below. Details are not described herein again.

Step 404: The server side sends data of the second target object to the client.

The server side obtains the data of the second target object from an object storage device that stores the data of the second target object, and sends the data of the second target object to the client.

Based on the foregoing step 401 to step 404, the client notifies the server side of an object to be accessed in a next request by sending an access request that carries a prefetch object header field to the server side, so that the server side asynchronously obtains and caches the prefetch object in advance via the pre-store queue. Therefore, a manner of collaboration between the client and the server side is provided for obtaining and caching the prefetch object in advance, thereby achieving an effect of reducing object access latency.

The foregoing describes, with reference to FIG. 4, how the server side obtains and caches the data of the first target object that may be subsequently read by the client. Based on this, a procedure in which the server side obtains and caches the data of the first target object can be optimized via the pre-store queue and the communication queue. The following describes data processing steps based on the pre-store queue and the communication queue with reference to FIG. 5.

Step 501: The client sends a second object access request to the server side.

As a possible implementation, for a specific manner in which the client sends the second object access request to the server side, reference is made to step 401 shown in FIG. 4. Details are not described herein again.

Step 502: The server side receives the second object access request.

As a possible implementation, for a specific manner in which the client receives the second object access request to the server side, reference is made to step 402 shown in FIG. 4. Details are not described herein again.

Step 503: The server side splits the second object access request into an access request for a prefetch object and an access request for a target object.

The server side extracts a prefetch object identifier from the second object access request as an access request for a prefetch object. A second object access request that does not carry the prefetch object identifier after extracting the prefetch object identifier is used as an access request for a target object.

Step 504: The server side adds the access request for the prefetch object to the pre-store queue.

As a possible implementation, the pre-store queue is also referred to as a PreSave Queue, and is used for maintaining a prefetch request.

Step 505: The server side executes the access request for the prefetch object based on the pre-store queue, and obtains and caches the data of the first target object.

As a possible implementation, the server side determines that the prefetch object is the first target object based on the access request for the prefetch object, obtains the data of the first target object from an object storage device that stores the data of the first target object, and caches the data of the first target object into the pre-store queue.

As a possible implementation, the pre-store queue is a priority queue. In the pre-store queue, data with an uncached first byte has a first priority, data with a smallest data body has a second priority, and data with a most recent access time has a third priority. The server side performs background asynchronous caching on the prefetch object based on a priority of the pre-store queue, thereby ensuring that the prefetch object better meets a requirement of a next request of the tenant, and improving performance of object access.

As a possible implementation, for the data of the object cached in the pre-store queue, the server side may be configured to periodically scan, based on a preset period, the data of the prefetch object downloaded in a pipe of the pre-store queue, and if the data of the prefetch object has exceeded a preset duration, the data of the prefetch object is deleted.

In a possible embodiment, if the data of the prefetch object in the pre-store queue has been released when the server side receives an object access request from the client, the data of the prefetch object is re-obtained, and the data of the prefetch object is sent to the client.

Step 506: The server side adds the access request for the target object to the communication queue.

As a possible implementation, the communication queue is also referred to as a Connect Queue, and the communication queue and the pre-store queue may be two different threads.

Step 507: The server side executes the access request for the target object based on the communication queue, and obtains the data of the second target object.

As a possible implementation, the server side determines that the target object is the second target object based on the access request for the target object, and obtains the data of the second target object from an object storage device that stores the data of the second target object.

Step 508: The server side sends data of the second target object to the client.

As a possible implementation, a specific manner in which the server side sends the data of the second target object to the client is the same as the manner in which the server side sends the data of the first target object to the client in step 304 shown in FIG. 3. Details are not described herein again.

Step 509: The client receives the data of the second target object.

As a possible implementation, a specific manner in which the client receives the data of the second target object is the same as the manner in which the client receives the data of the first target object in step 305 shown in FIG. 3. Details are not described herein again.

Based on the foregoing step 501 to step 509, because the communication queue and the pre-store queue may be two different threads, processing of obtaining and caching the data of the prefetch object in the pre-store queue is a background asynchronous task, which does not block a thread of the communication queue, thereby ensuring normal object data access and ensuring performance of the object storage system. In addition, the server side may obtain and cache the data of the prefetch object during an idle period (for example, when the communication queue is empty) based on the pre-store queue, thereby improving resource utilization of the server side during idle periods and improving the speed at which the client obtains large batches of objects.

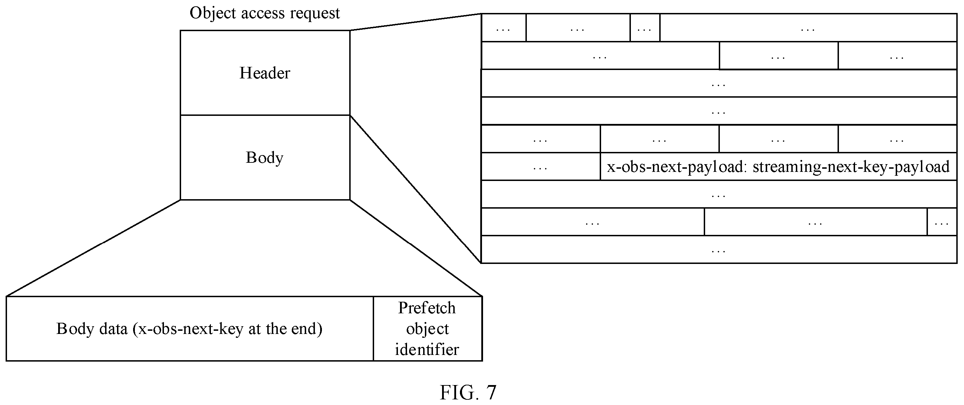

In the foregoing steps shown in FIG. 3 to FIG. 5, the server side needs to identify, obtain, or cache the prefetch object based on the prefetch object identifier carried in the object access request. The following describes a specific form of the prefetch object identifier with reference to FIG. 6 and FIG. 7.

As shown in FIG. 6, the object access request may be a packet, and the object access request includes a header and a body. The prefetch object identifier may be carried in the header of the object access request.

As shown in FIG. 7, the object access request may be a packet, and the object access request includes a header and a body. The prefetch object identifier may be carried in the body of the object access request.

For example, the header of the object access request carries x-obs-next-payload: streaming-next-key-payload, which indicates that the prefetch object identifier is located in the body of the object access request. The end of the data of the body carries x-obs-next-key as a segmentation identifier, a part before the segmentation identifier is data of the object, and a part after the segmentation identifier is a prefetch object identifier.

As a possible implementation, the prefetch object identifier includes a whole-object prefetch identifier (X-obs-next-key) and a range-object prefetch identifier (X-obs-next-range).

The whole-object prefetch identifier indicates an object name of the prefetch object. For example, the whole-object prefetch identifier is X-obs-next-key:objectname1/X-End, indicating that an object name of the prefetch object is objectname1. In this embodiment, objectname1 may be an object name of the first target object.

The range-object prefetch identifier indicates a data range of the prefetch object. For example, the range-object prefetch identifier is X-obs-next-range:bytes 0-5000/X-End, indicating that the prefetch data (data that needs to be obtained and cached) is data corresponding to a data range of 0 to 5000 bytes of the prefetch object.

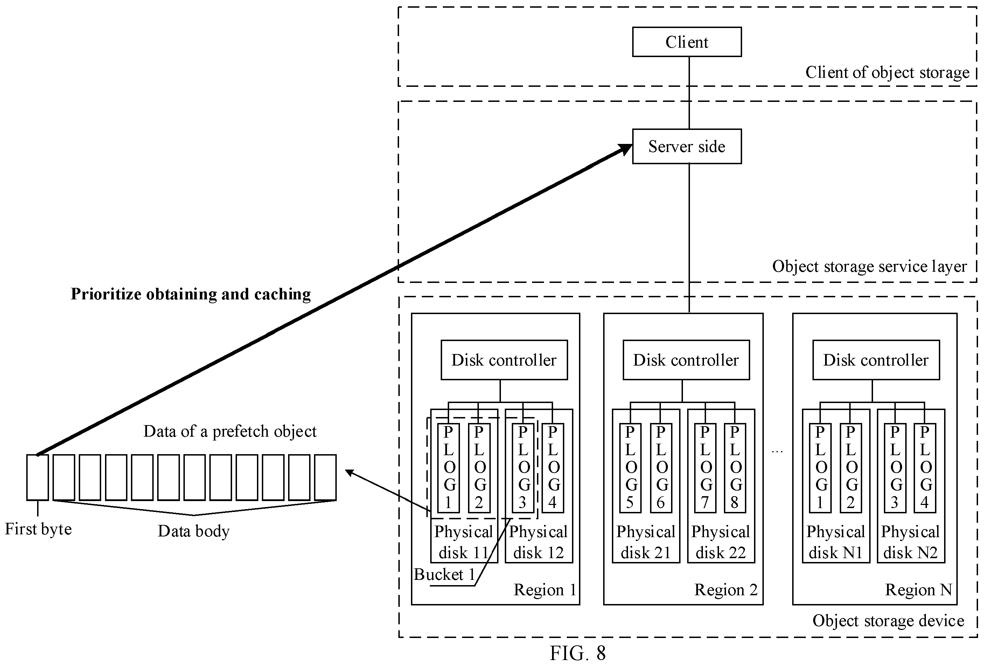

Based on the data processing method shown in FIG. 3 to FIG. 5 provided in this application, to improve first-byte experience of a user, as shown in FIG. 8, when a task in the pre-store queue is executed, the server side distinguishes between a first byte of an object (metadata of an object is obtained in a first-in-first-out order after entering the pre-store queue) and a data body. Before inserting a task into the pre-store queue, the first byte of the prefetch object is first cached, and then the data body is processed, so as to reduce a time required for sending the first byte, so that the client can quickly obtain the first byte and improve experience of the first byte.

As a possible implementation, the first byte may be a first byte of data of an object, or may be a first batch of bytes (for example, 512 bytes) of data of an object.

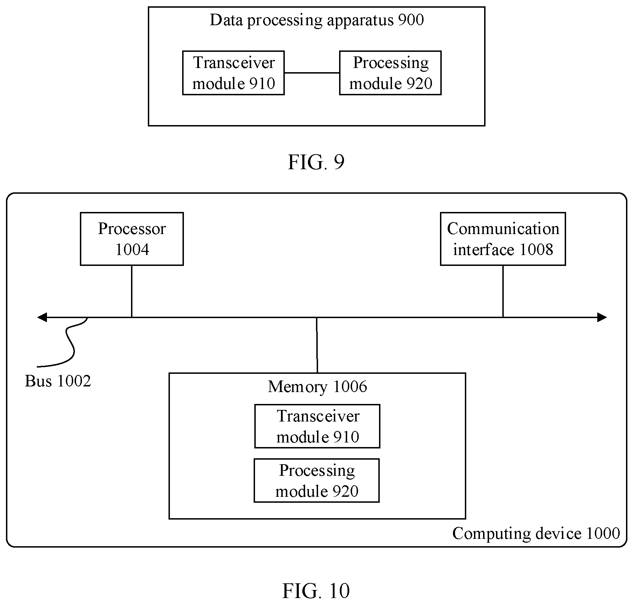

To cooperate with the data processing method shown in FIG. 3 to FIG. 5 provided in this application, this application further provides a data processing apparatus 900. The data processing apparatus 900 can be configured to implement functions of the server side in the data processing method shown in FIG. 3 to FIG. 5. As shown in FIG. 9, the data processing apparatus 900 includes a transceiver module 910 and a processing module 920.

The transceiver module 910 is configured to receive a first object access request sent by a client of an object storage service, where the first object access request includes a first target object.

The processing module 920 is configured to determine cached data of the first target object in response to the first object access request, where the data of the first target object is obtained from a target object storage device and cached based on a prefetch object identifier carried in a second object access request, and the prefetch object identifier indicates that the first target object is a prefetch object.

The transceiver module 910 is further configured to send the data of the first target object to the client.

As a possible implementation, the transceiver module 910 is further configured to receive the second object access request sent by the client, where the second object access request includes a second target object and the prefetch object identifier. The processing module 920 is further configured to obtain, from the target object storage device, and cache the data of the first target object based on the prefetch object identifier. The transceiver module 910 is further configured to send data of the second target object to the client.

As a possible implementation, the server side further includes a pre-store queue and a communication queue. The processing module 920 is further configured to: determine that a received object access request includes a prefetch object identifier, add an access request for the prefetch object in the received object access request to the pre-store queue, and add an access request for the target object in the received object access request to the communication queue; or determine that a received object access request does not include a prefetch object identifier, and add the received object access request to the communication queue.

As a possible implementation, the prefetch object identifier includes a whole-object prefetch identifier and a range-object prefetch identifier, the whole-object prefetch identifier indicates an object name of a prefetch object, and the range-object prefetch identifier indicates a data range of the prefetch object.

As a possible implementation, the processing module 920 is specifically configured to: obtain data of a first target object from a first target bucket, and sequentially cache a first byte and a data body of the data of the first target object.

As a possible implementation, the pre-store queue is a priority queue, and in the pre-store queue, data with an uncached first byte has a first priority, data with a smallest data body has a second priority, and data with a most recent access time has a third priority.

As a possible implementation, the processing module 920 is specifically configured to: determine that a cache time of the first target object is greater than or equal to a preset time, and delete the cached data of the first target object.

Both the transceiver module 910 and the processing module 920 may be implemented by software, or may be implemented by hardware. For example, the following uses the transceiver module 910 as an example to describe an implementation of the transceiver module 910. Similarly, for an implementation of the processing module 920, reference is made to the implementation of the transceiver module 910.

The module is used as an example of a software functional unit, and the transceiver module 910 may include code run on a computing instance. The computing instance may include at least one of a physical host (a computing device), a virtual machine, or a container. Furthermore, there may be one or more computing instances. For example, the transceiver module 910 may include code run on a plurality of hosts/virtual machines/containers. It should be noted that the plurality of hosts/virtual machines/containers configured to run the code may be distributed in the same region (region), or may be distributed in different regions. Furthermore, the plurality of hosts/virtual machines/containers configured to run the code may be distributed in the same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on the same virtual private cloud (virtual private cloud, VPC), or may be distributed on a plurality of VPCs. Generally, one VPC is configured in one region. A communication gateway needs to be configured in each VPC for communication between two VPCs in the same region or cross-region communication between VPCs in different regions. Interconnection between the VPCs is implemented via the communication gateway.

The module is used as an example of a hardware function unit, and the transceiver module 910 may include at least one computing device, for example, a server. Alternatively, the transceiver module 910 may be a device implemented by using an application-specific integrated circuit (application-specific integrated circuit, ASIC) or a programmable logic device (programmable logic device, PLD), or the like. The PLD may be implemented by using a complex programmable logic device (complex programmable logic device, CPLD), a field-programmable gate array (field-programmable gate array, FPGA), generic array logic (generic array logic, GAL), or any combination thereof.

A plurality of computing devices included in the transceiver module 910 may be distributed in the same region, or may be distributed in different regions. The plurality of computing devices included in the transceiver module 910 may be distributed in the same AZ, or may be distributed in different AZs. Similarly, the plurality of computing devices included in the transceiver module 910 may be distributed in the same VPC, or may be distributed in a plurality of VPCs. The plurality of computing devices may be any combination of computing devices such as a server, an ASIC, a PLD, a CPLD, an FPGA, and GAL.

It should be noted that, in another embodiment, either the transceiver module 910 and the processing module 920 may be configured to perform any step in the data processing method. Steps implemented by the transceiver module 910 and the processing module 920 may be specified as needed. The transceiver module 910 and the processing module 920 separately implement different steps in the data processing method, to implement all functions of the data processing apparatus 900.

This application further provides a computing device 1000. As shown in FIG. 10, the computing device 1000 includes a bus 1002, a processor 1004, a memory 1006, and a communication interface 1008. The processor 1004, the memory 1006, and the communication interface 1008 communicate with each other via the bus 1002. The computing device 1000 may be a server or a terminal device. It should be understood that quantities of processors and memories in the computing device 1000 are not limited in this application.

The bus 1002 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 10, but it does not mean that there is only one bus or only one type of bus. The bus 1002 may include a path for information transfer between various components (for example, the memory 1006, the processor 1004, and the communication interface 1008) of the computing device 1000.

The processor 1004 may include any one or more of processors, such as a central processing unit (central processing unit, CPU), a graphics processing unit (graphics processing unit, GPU), a microprocessor (microprocessor, MP), or a digital signal processor (digital signal processor, DSP).

The memory 1006 may include a volatile memory (volatile memory), for example, a random access memory (random access memory, RAM). The processor 1004 may further include a non-volatile memory (non-volatile memory), for example, a read-only memory (read-only memory, ROM), a flash memory, a hard disk drive (hard disk drive, HDD), or a solid state drive (solid state drive, SSD).

The memory 1006 stores executable program code, and the processor 1004 executes the executable program code to separately implement functions of the modules included in the foregoing data processing apparatus 900, so as to implement the data processing method. In other words, the memory 1006 stores instructions used for performing the data processing method.

Alternatively, the memory 1006 stores executable code, and the processor 1004 executes the executable code to separately implement functions of the foregoing client or server side, so as to implement the data processing method. In other words, the memory 1006 stores instructions used for performing the data processing method.

The communication interface 1008 uses a transceiver module, for example, but not limited to, a network interface card or a transceiver, to implement communication between the computing device 1000 and another device or a communication network.

Given that the data processing method provided in this application is applied to an object storage system, the object storage system may include a plurality of clients or a plurality of server sides. Therefore, this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

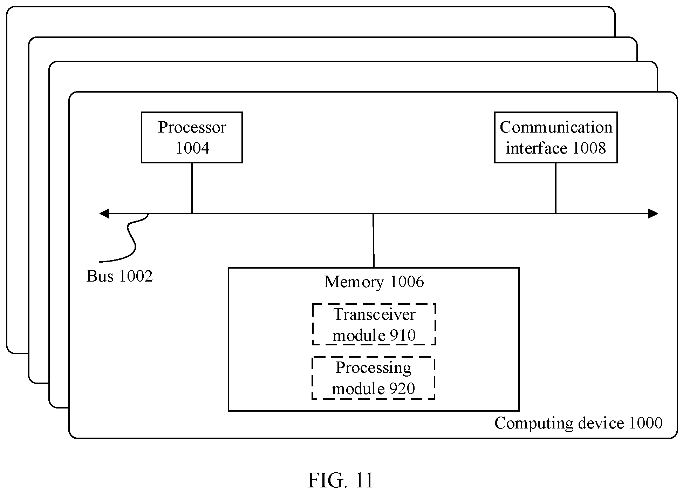

As shown in FIG. 11, the computing device cluster includes at least one computing device 1000. A memory 1006 in one or more computing devices 1000 in the computing device cluster may store same instructions used for performing the data processing method.

In some possible implementations, the memory 1006 in the one or more computing devices 1000 in the computing device cluster may separately store some instructions used for performing the data processing method. In other words, a combination of the one or more computing devices 1000 may jointly execute the instructions used for performing the data processing method.

It should be noted that memories 1006 in different computing devices 1000 in the computing device cluster may store different instructions respectively used for performing some functions of the data processing apparatus 900. In other words, instructions stored in the memories 1006 in different computing devices 1000 can implement functions of one or more modules included in the data processing apparatus 1000.

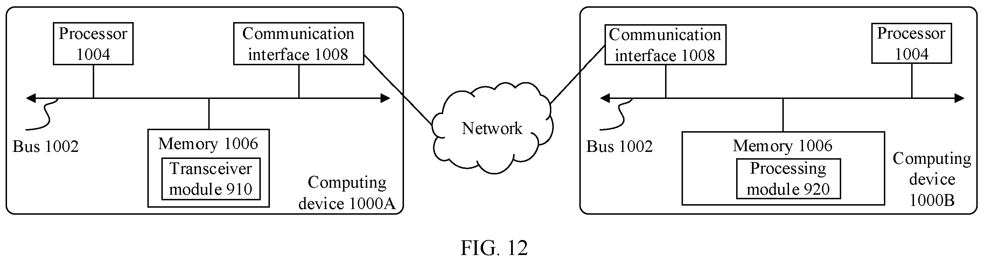

In some possible implementations, the one or more computing devices in the computing device cluster may be connected via a network. The network may be a wide area network, a local area network, or the like. FIG. 12 shows a possible implementation. As shown in FIG. 12, two computing devices 1000A and 1000B are connected via a network. Specifically, each computing device is connected to the network via a communication interface in the computing device. In this possible implementation, the memory 1006 in the computing device 1000A stores an instruction for performing a function of one or more modules of the transceiver module 910 and the processing module 920. In FIG. 12, an example in which the memory 1006 in the computing device 1000A stores an instruction for performing a function of the transceiver module 910 is used. In addition, the memory 1006 in the computing device 1000B stores an instruction for performing a function of one or more modules of the transceiver module 910 and the processing module 920. In FIG. 12, an example in which the memory 1006 in the computing device 1000B stores an instruction for performing a function of the processing module 920 is used.

It should be understood that a function of the computing device 1000A shown in FIG. 12 may alternatively be completed by a plurality of computing devices 1000. Similarly, a function of the computing device 1000B may alternatively be completed by a plurality of computing devices 1000.

An embodiment of this application further provides a computer program product including instructions. The computer program product may be software or a program product that includes the instructions and that can run on a computing device or can be stored in any usable medium. When the computer program product runs on at least one computing device, the at least one computing device is caused to perform the data processing method shown in FIG. 3, or the steps performed by the client or the server side in the data processing method shown in FIG. 3.

Embodiments of this application further provide a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid state drive), or the like. The computer-readable storage medium includes instructions, and the instructions instruct the computing device to perform the data processing method shown in FIG. 3, or the steps performed by the client or the server side in the data processing method shown in FIG. 3.

All or some of the foregoing embodiments may be implemented by using software, hardware (for example, circuit), firmware, or any combination thereof. When software is used to implement embodiments, the foregoing embodiments may be implemented completely or partially in the form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, including one or more usable media sets. The usable medium may be a magnetic medium (for example, a floppy disk, a hard disk, or a magnetic tape), an optical medium (for example, a DVD), or a semiconductor medium. The semiconductor medium may be a solid state drive.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference can be made to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in the form of a software product. The computer software product is stored in a storage medium, and includes several instructions for enabling a computing device (which may be a personal computer, a server, a network device, or the like) to perform all or some of the steps of the methods described in embodiments of this application. The foregoing storage medium includes: any medium that can store program code, such as a USB flash disk, a removable hard disk, a read-only memory, a random access memory, a magnetic disk, or an optical disc.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a singular item (piece) or any combination of plural items (pieces). For example, at least one item (piece) of a, b, or c may represent a, b, c, a and b, a and c, b and c, or a and b and c, where a, b, and c may be singular or plural.

It should be noted that in this application, the words such as "example" or "for example" are used to represent giving an example, an illustration, or a description. Any embodiment or design scheme described as "example" or "for example" in this application should not be explained as being more preferred or having more advantages than another embodiment or design scheme. To be precise, use of the words such as "example" or "for example" is intended to present a relative concept in a specific manner.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A data processing method, applied to a server side of an object storage service, wherein the server side is configured to access at least one object storage device managed by a cloud platform, the at least one object storage device is located in a plurality of data centers in different regions, each data center comprises a plurality of servers, and the method comprises:
receiving a first object access request sent by a client of the object storage service, wherein the first object access request comprises a first target object;
determining cached data of the first target object in response to the first object access request, wherein the data of the first target object is obtained from a target object storage device and cached based on a prefetch object identifier carried in a second object access request, and the prefetch object identifier indicates that the first target object is a prefetch object; and
sending the data of the first target object to the client.

2. The method according to claim 1, wherein before the receiving the first object access request sent by the client of the object storage service, the method further comprises:
receiving the second object access request sent by the client, wherein the second object access request comprises a second target object and the prefetch object identifier;
obtaining, from the target object storage device, and caching the data of the first target object based on the prefetch object identifier; and
sending data of the second target object to the client.

3. The method according to claim 1 or 2, wherein the server side further comprises a pre-store queue and a communication queue, and the method further comprises:
determining that a received object access request comprises a prefetch object identifier, adding an access request for a prefetch object in the received object access request to the pre-store queue, and adding an access request for a target object in the received object access request to the communication queue; or
determining that a received object access request does not comprise a prefetch object identifier, and adding the received object access request to the communication queue.

4. The method according to any one of claims 1 to 3, wherein the prefetch object identifier comprises a whole-object prefetch identifier and a range-object prefetch identifier, the whole-object prefetch identifier indicates an object name of a prefetch object, and the range-object prefetch identifier indicates a data range of the prefetch object.

5. The method according to claim 3 or 4, wherein the obtaining, from the target object storage device, and caching the data of the first target object based on the prefetch object identifier comprises:
obtaining the data of the first target object from the target object storage device, and sequentially caching a first byte and a data body of the data of the first target object.

6. The method according to claim 5, wherein the pre-store queue is a priority queue, and in the pre-store queue, data with an uncached first byte has a first priority, data with a smallest data body has a second priority, and data with a most recent access time has a third priority.

7. The method according to any one of claims 1 to 6, wherein after the sending the data of the first target object to the client, the method further comprises:
determining that a cache time of the first target object is greater than or equal to a preset time, and deleting the cached data of the first target object.

8. A data processing apparatus, applied to a server side of an object storage service, wherein the server side is configured to access at least one object storage device managed by a cloud platform, the at least one object storage device is located in a plurality of data centers in different regions, each data center comprises a plurality of servers, and the apparatus comprises:
a transceiver module, configured to receive a first object access request sent by a client of the object storage service, wherein the first object access request comprises a first target object; and
a processing module, configured to determine cached data of the first target object in response to the first object access request, wherein the data of the first target object is obtained from a target object storage device and cached based on a prefetch object identifier carried in a second object access request, and the prefetch object identifier indicates that the first target object is a prefetch object; wherein
the transceiver module is further configured to send the data of the first target object to the client.

9. An object storage service system, comprising:
a client, configured to send a second object access request to a server side of an object storage service, wherein the object access request comprises a second target object and a prefetch object identifier, and the prefetch object identifier indicates that a first target object is a prefetch object, to indicate the server side to obtain, from a target object storage device, and cache data of the first target object based on the prefetch object identifier, and to send data of the second target object to the client; and further configured to send a first object access request to the server side, and receive the data of the first target object sent by theserver; and
a server side, configured to: receive the first object access request sent by the client, wherein the first object access request comprises the first target object; determine the cached data of the first target object in response to the first object access request, wherein the data of the first target object is obtained from the target object storage device and cached based on the prefetch object identifier carried in the second object access request, and the prefetch object identifier indicates that the first target object is a prefetch object; and send the data of the first target object to the client.

10. A computing device cluster, comprising at least one computing device, wherein each computing device comprises a processor and a memory; and
the processor of the at least one computing device is configured to execute instructions stored in the memory of the at least one computing device, to cause the computing device cluster to perform the method according to any one of claims 1 to 7.

11. A computer program product comprising instructions, wherein when the instructions are run by a computing device cluster, the computing device cluster is caused to perform the method according to any one of claims 1 to 7.

12. A computer-readable storage medium, comprising computer program instructions, wherein when the computer program instructions are executed by a computing device cluster, the computing device cluster performs the method according to any one of claims 1 to 7.
